# EUROPEAN PATENT APPLICATION

(11) **EP 4 800 820 A1**
(43) Date of publication of application: **02.09.2026**
(21) Application number: 24882057.3
(22) Date of filing: 17.09.2024
(51) Int. Cl.: H01M 50/204, H01M 10/613, H01M 10/643, H01M 10/6554, H01M 50/213, H01M 50/289, H01M 50/291, H01M 50/293, H01M 50/509

(54) **POWER SUPPLY DEVICE**

(30) Priority: 25.10.2023 JP 2023183290
(71) Applicant: Panasonic Intellectual Property Management Co., Ltd., Kadoma-shi, Osaka 571-0057 (JP)
(72) Inventor: LU, Jia, kadoma-shi, Osaka 571-0057 (JP); SAKAMOTO, Tomonori, kadoma-shi, Osaka 571-0057 (JP); KAWAMURA, Kazuhiro, kadoma-shi, Osaka 571-0057 (JP); RI, Ugyong, kadoma-shi, Osaka 571-0057 (JP); IKEDA, Yusuke, kadoma-shi, Osaka 571-0057 (JP)
(74) Representative: Eisenführ Speiser
(86) International application number: PCT/JP2024/033040
(87) International publication number: WO 2025/088940

(57) **Abstract**

A power supply device includes a battery assembly including secondary battery cells accommodated in an exterior case, and a heat-conductive member stacked between the battery assembly and the exterior case. The battery assembly includes a battery holder disposing the secondary battery cells arranged in parallel to one another. Both end surfaces of the cells are disposed on same planes, respectively. Heat conduction surfaces of the secondary battery cells are exposed from the battery holder and are thermally coupled to the heat-conductive member. The secondary battery cells constitute battery groups each including secondary battery cells disposed at a predetermined first interval. The battery groups are disposed at a second interval larger than the first interval. The heat-conductive member has a sheet shape or a plate shape and is thermally coupled to the cells across the battery groups.

## Description

### TECHNICAL FIELD

The present invention relates to a power supply device including secondary battery cells accommodated in an exterior case.

### BACKGROUND ART

A power supply device including secondary battery cells accommodated in an exterior case is used as a power supply for a power storage system for, e.g., factories and homes, a power supply for vehicles such as hybrid vehicles and electric vehicles. In the power supply device, the secondary battery cells are accommodated in an exterior case as a battery assembly. A power supply device including a lot of secondary battery cells, when an unsafe event such as an internal short circuit occurs in any of the secondary battery cells, the secondary battery cells generate heat, and the heat may heat adjacent secondary battery cells, which may cause a chain failure. Particularly when there is no route for releasing the generated heat to the outside, the accumulated heat is finally released to the adjacent secondary battery cells, so that a chain failure is likely to occur. When heat is generated inside the shielded battery block, all the battery cells in the battery block may be heated and a failure occurs.

In recent years, there has been a demand for higher output and higher capacity of a power supply device. In order to meet such a demand, it is necessary to provide a power supply device having a lot of secondary battery cells in addition to using secondary battery cells having a large capacity. But in this case, when an unsafe event occurs in any of the secondary battery cells and heat is generated at a high temperature, heat is likely to be accumulated around the heat generating battery cell that generates heat, and a failure is likely to occur. As a method for avoiding the chain heat generation, a heat insulating material or a heat dissipation plate is inserted into a battery block including the secondary battery cells to enhance heat dissipation characteristics, whereas the structure has a problem that the number of additional components increases and the structure is complicated.

### CITATION LIST

### Patent Literature

PTL 1: Japanese Patent Laid-Open Publication No. 9-306447

### SUMMARY OF INVENTION

According to the invention, in a power supply device including secondary battery cells, when any of the secondary battery cells is in an abnormal state and generates heat inside a battery block including the secondary battery cells assembled, it is possible to prevent adjacent secondary battery cells from being heated by the heat generated from the abnormal battery cell and prevent the adjacent secondary battery cells from causing a failure in a chain reaction.

A power supply device according to an aspect of the invention includes: a battery assembly including a plurality of secondary battery cells; an exterior case accommodating the battery assembly therein; and a heat-conductive member stacked between the battery assembly and the exterior case and thermally coupled to the plurality of secondary battery cells. The plurality of secondary battery cells are cylindrical batteries. The battery assembly further includes a battery holder disposing the plurality of secondary battery cells parallel to one another in multiple stages and rows such that both end surfaces of each of the plurality of secondary battery cells in a longitudinal direction of the each of the plurality of secondary battery cells are disposed on same planes, respectively, and that one end surface of the both end surfaces of the each of the plurality of secondary battery cells is exposed, as a heat conduction surface, from the battery holder and is thermally coupled to the heat-conductive member. The plurality of secondary battery cells constitute a plurality of battery groups, each battery group of the plurality of battery groups including the plurality of secondary battery cells disposed at a predetermined first interval (d1) between adjacent secondary battery cells of the plurality of secondary battery cells constituting the each battery group, the plurality of battery groups being disposed at a second interval (d2) between secondary battery cells of adjacent battery groups of the plurality of battery groups, the second interval (d2) being larger than the first interval (d1). The heat-conductive member has a sheet shape or a plate shape, and is thermally coupled to the plurality of secondary battery cells across the plurality of battery groups.

The power supply device according to the present invention has a feature that, even when an unsafe event occurs in a secondary battery cell accommodated in the exterior case to generate heat, heat is prevented from being accumulated therein, and occurrence of a continuous failure can be effectively prevented.

### BRIEF DESCRIPTION OF DRAWINGS

FIG. 1 is a perspective view of a power supply device according to Exemplary Embodiment 1 of the present invention.
FIG. 2 is an exploded perspective view of the power supply device illustrated in FIG. 1.
FIG. 3 is a vertical cross-sectional view of the power supply device along line III-III illustrated in FIG. 1.
FIG. 4 is a vertical cross-sectional view of the power supply device along line IV-IV illustrated in FIG. 1.
FIG. 5 is a perspective view of a battery assembly illustrated in FIG. 2.
FIG. 6 is an exploded perspective view of the battery assembly illustrated in FIG. 5.
FIG. 7 is a perspective view of a battery block illustrated in FIG. 5.
FIG. 8 is a partially enlarged plan view of the battery block illustrated in FIG. 7.
FIG. 9 is a partially enlarged exploded perspective view of the battery block illustrated in FIG. 7.
FIG. 10 is a partially enlarged exploded perspective view of the battery block illustrated in FIG. 9 viewed from below.
FIG. 11 is a horizontal cross-sectional view of a battery unit of the battery block illustrated in FIG. 7.
FIG. 12 is a schematic arrangement diagram of secondary battery cells constituting a battery unit illustrated in FIG. 11.
FIG. 13 is a horizontal cross-sectional view of the secondary battery cells for illustrating a state in which upper end portions of the secondary battery cells are fixed with adhesive.
FIG. 14 is a horizontal cross-sectional view of the secondary battery cells for illustrating a state in which lower end portions of the secondary battery cells are fixed with adhesive.
FIG. 15 is a schematic arrangement diagram of battery groups for illustrating a configuration and an arrangement of the battery groups according to another example.
FIG. 16 is a schematic arrangement diagram illustrating a configuration and an arrangement of battery groups according to another example.

### DESCRIPTION OF EMBODIMENT

First, a point of interest of the invention will be described. In a power supply device having a structure in which a lot of secondary battery cells having a cylindrical outer shape are arranged in multiple stages and rows in parallel to each other, a lot of secondary battery cells can be arranged in a space-saving manner by narrowing an interval between adjacent secondary battery cells, and a capacity can be increased while reducing an outer shape of the power supply device. However, in a structure in which a lot of secondary battery cells are arranged with a narrow battery interval, when an abnormality occurs in any of the secondary battery cells and heat is generated, the heat is accumulated around the heat generating battery cell that generates heat, and the heat generating battery cell becomes abnormally high temperature, or adjacent battery cells are heated, and there is an adverse effect that a failure occurs in the adjacent battery cells in a chain manner. In order to solve such an adverse effect, by widening the interval between the adjacent secondary battery cells, it is possible to reduce heat transfer between the secondary battery cells and to prevent the occurrence of a chain failure. However, when the interval between the adjacent secondary battery cells is increased, a lot of secondary battery cells cannot be disposed in a space-saving manner, and the outer shape of the power supply device is large. As described above, reducing the size of the outer shape of the power supply device by narrowing the interval between a lot of secondary battery cells and disposing the secondary battery cells in a space-saving manner, and preventing the occurrence of a continuous failure due to heat accumulation around the secondary battery cells when an abnormality occurs in any of the secondary battery cells and heat is generated have mutually contradictory characteristics, and these characteristics have not been satisfied simultaneously.

In order to solve the above problem, inventors have studied various structures in repetitive trial and error, and as a result, have found that, by adopting a structure in which a heat-conductive member is thermally coupled to and disposed on one end surface of secondary battery cells. When heat is generated, heat is conducted from a heat generating battery cell that generates heat to the heat-conductive member to dissipate heat, it is possible to avoid a situation in which the heat is accumulated around the heat generating battery cell and a failure occurs in a chain manner even in a structure in which a lot of secondary battery cells are disposed in a space-saving manner by narrowing intervals between specific secondary battery cells. That is, the present invention implements a power supply device capable of effectively preventing a failure from occurring in a chain manner due to heat accumulation around a heat generating battery cell while having a structure in which a lot of secondary battery cells are disposed in a space-saving manner by controlling a heat dissipation state of a plurality of secondary battery cells and an interval between the plurality of secondary battery cells.

A power supply device according to an aspect of the present invention is a power supply device including: a battery assembly including a plurality of secondary battery cells; an exterior case accommodating the battery assembly therein; and a heat-conductive member stacked between the battery assembly and the exterior case and thermally coupled to the plurality of secondary battery cells. The plurality of secondary battery cells are cylindrical batteries. The battery assembly further includes a battery holder disposing the plurality of secondary battery cells parallel to one another in multiple stages and rows such that both end surfaces of each of the plurality of secondary battery cells in a longitudinal direction of the each of the plurality of secondary battery cells are disposed on same planes, respectively, and that one end surface of the both end surfaces of the each of the plurality of secondary battery cells is exposed, as a heat conduction surface, from the battery holder and is thermally coupled to the heat-conductive member. The plurality of secondary battery cells constitute a plurality of battery groups, each battery group of the plurality of battery groups including the plurality of secondary battery cells disposed at a predetermined first interval (d1) between adjacent secondary battery cells of the plurality of secondary battery cells constituting the each battery group, the plurality of battery groups being disposed at a second interval (d2)l between secondary battery cells of adjacent battery groups of the plurality of battery groups, the second interval (d2) being larger than the first interval (d1). The heat-conductive member has a sheet shape or a plate shape, and is thermally coupled to the plurality of secondary battery cells across the plurality of battery groups.

In the above configuration, the battery groups in which the predetermined first interval is provided between the secondary battery cells adjacent to each other are disposed at a second interval larger than the first interval, and the heat of the heat generating battery cell that generates heat is conducted to the surroundings via the heat-conductive member to dissipate the heat of the heat generating battery cell while diffusing the heat, so that even when an unsafe event occurs in any of the secondary battery cells and the heat is generated, it is possible to effectively prevent the heat from being accumulated around the heat generating battery cell, to reliably prevent spread of fire between the adjacent battery groups, and to effectively prevent spread of fire in the battery group including the heat generating battery cell.

In the power supply device described above, due to a synergistic effect of the battery groups disposed at the second interval and the secondary battery cells disposed at the first interval in which the second interval is larger than the first interval, and the heat-conductive member thermally coupled to the cells across the battery groups with one end surface of the secondary battery cell as a heat conduction surface to conduct heat of the heat generating battery cell to the heat-conductive member and dissipate the heat in a wide range, even when any of the secondary battery cells generates heat, the heat is prevented from being accumulated around the heat generating battery cell to prevent the spread of fire. In the power supply device, only by adjusting the interval between the secondary battery cells to the first interval and the second interval larger than the first interval, it is not possible to prevent the heat of the heat generating battery cell from being accumulated and the spread of fire from occurring. Even by only thermally coupling one end surfaces of the secondary battery cells to the heat-conductive member, it is not possible to sufficiently dissipate the heat of the heat generating battery cell, and it is not possible to prevent spread of fire from occurring due to the heat of the heat generating battery cell being accumulated. The power supply device according to the invention has a unique configuration in which the heat-conductive member is thermally coupled to the plurality of secondary battery cells at one end surface of the secondary battery cell as a heat conduction surface while adjusting the interval between the secondary battery cells to the first interval and the second interval larger than the first interval. Thus, it is possible to effectively prevent the heat of the heat generating battery cell from being accumulated and prevent the spread of fire.

In the power supply device according to another aspect of the invention, the battery holder includes a first divided holder and a second divided holder that are divided at an intermediate portion of each of the plurality of secondary battery cells in the longitudinal direction. The first divided holder includes: first holding tubular portions connected to one another in multiple stages and rows such that one end portion of the each of the plurality of secondary battery cells at a first end surface of the both end surfaces of the each of the plurality of secondary battery cells is held by a corresponding one of the first divided holders; and a surface plate closing tip ends of the plurality of first holding tubular portions. The surface plate has electrode windows opening therein to expose positive and negative electrodes provided on the first end surface of the each of the plurality of secondary battery cells through a corresponding one of the electrode windows. The second divided holder includes a plurality of second holding tubular portions connected to each other in multiple stages and rows such that another end portion of the each of the plurality of secondary battery cells at a second end surface of the both end surfaces of the each of the plurality of secondary battery cells is held by a corresponding one of the second divided holders. The plurality of second holding tubular portions have opening windows provided in tip ends of the plurality of second holding tubular portions, respectively, to expose the heat conduction surface of the each of the plurality of secondary battery cells through a corresponding one of the opening windows.

In the above configuration, since the battery holder is divided into the first divided holder and the second divided holder. The electrode window through which the positive and negative electrodes of the secondary battery cell are exposed is opened in the surface plate formed by closing the tip ends of the holding tubular portions included in the first divided holder, it is possible to reliably thermally couple the secondary battery cells to the heat-conductive member by exposing the heat conduction surfaces of the secondary battery cells from the opening windows provided by opening the tip ends of the holding tubular portions included in the second divided holder while exposing and electrically connecting the electrodes of the secondary battery cells accommodated in the battery holder from the electrode windows.

In a power supply device according to another aspect of the invention, the battery holder is made of resin. The plurality of the secondary battery cells include pairs of adjacent secondary battery cells. End each pair of the adjacent secondary battery cells are fixed to each other with adhesive having flame retardancy and are held at a predetermined interval between the each pair of the adjacent secondary battery cells.

In to the above configuration, since the secondary battery cells adjacent to each other are fixed to each other with the adhesive having flame retardancy, even when an unsafe event occurs in any of the secondary battery cells, a failure such as heat generation or ignition occurs, and the battery holder made of a resin is melted by high temperature heat, the adhesive for fixing the secondary batteries adjacent to each other does not burn, and the secondary battery cells are held at a predetermined interval, so that it is possible to reliably prevent adverse effects such as irregular collapse of the accommodated secondary battery cells and improve safety. In the power supply device described above, since the adjacent secondary battery cells are fixed to each other with adhesive, it is possible to prevent rotation of the secondary battery cell which is a cylindrical battery.

In a power supply device according to another aspect of the invention, the adhesive having flame retardancy is silicone-based adhesive, epoxy-based adhesive, or zirconia-silica-based adhesive.

In a power supply device according to another aspect of the invention, the surface plate of the first divided holder has boundary windows opening therein, a corresponding one of the boundary windows being positioned and opening between the each pair of the adjacent secondary battery cells. Portions of the first holding tubular portions exposed from the boundary windows are partially cut out to form cutout portions having groove shapes in the first holding tubular portions such that side surfaces of the each pair of the adjacent secondary battery cells facing each other are exposed from the cutout portions so as to form filling recesses filled with the adhesive, a corresponding one of the filling recesses being formed between the each pair of the adjacent secondary battery cells and on both sides of the corresponding one of the cutout portions.

In to the above configuration, since the surface plate of the first divided holder includes the boundary windows opening between the secondary battery cells adjacent to each other, and the filling recess filled with the adhesive is provided inside the boundary windows, the adjacent secondary battery cells can be bonded and fixed by simply and easily filling the filling recess with the adhesive from the outside of the battery holder. In particular, since the filling recess is formed between the side surfaces of the secondary battery cells disposed on both sides by the cutout portion provided by partially cutting out the holding tubular portion exposed from the boundary window, a shape and a size of the filling recess can be easily adjusted by adjusting a depth and a width of the cutout portion, and the secondary battery cells can be reliably bonded and fixed to each other.

In the power supply device according to another aspect of the invention, portions of opening edges of the opening windows of the second holding tubular portions are partially cut out to form cutout portions having groove shapes in the second holding tubular portions such that side surfaces of the each pair of the adjacent secondary battery cells facing each other are exposed from the cutout portions so as to form filling recesses filled with the adhesive, a corresponding one of the filling recesses being formed between the each pair of the adjacent secondary battery cells and on both sides of the corresponding one of the cutout portions.

In the above configuration, since the second divided holder is positioned between the secondary battery cells adjacent to each other at the opening edge of the opening window and is provided with the filling recess filled with the adhesive, the adjacent secondary battery cells can be bonded and fixed to each other by simply and easily filling the filling recess with the adhesive from the outside of the battery holder. In particular, since the filling recess is formed between the side surfaces of the secondary battery cells disposed on both sides by the cutout portion provided by partially cutting out the holding tubular portion between the secondary battery cells adjacent to each other, the shape and size of the filling recess can be easily adjusted by adjusting the depth and width of the cutout portion, and the secondary battery cells can be reliably bonded and fixed to each other.

In the power supply device according to another aspect of the invention, the filling recesses includes: a first filling recess formed between the plurality of secondary battery cells constituting the each battery group; and a second filling recess formed between the secondary battery cells of the adjacent battery groups. The plurality of secondary battery cells constituting the each battery group are held at the first interval (d1) via a first adhesive portion formed of the adhesive filling the first filling recess. The secondary battery cells between the adjacent battery groups are held at the second interval (d2) via a second adhesive portion formed of the adhesive filling the second filling recess.

In the above configuration, since the plurality of secondary batteries constituting each battery group are held at the first interval (d1) via the first adhesive portion formed in the first filling recess, and the adjacent secondary batteries are held at the second interval (d2) via the second adhesive portion formed in the second filling recess between the battery groups adjacent to each other, the plurality of secondary battery cells held by the battery holder can be reliably fixed at the predetermined interval via the first adhesive portion and the second adhesive portion.

In a power supply device according to another aspect of the invention, the battery holder further includes a partition wall disposed between the adjacent battery groups.

In the above configuration, since the partition wall is provided between the battery groups adjacent to each other, it is possible to more effectively reduce heat transfer between the secondary battery cells disposed at the second interval between the battery groups, and to reliably prevent spread of fire between the battery groups. As described above, in a structure in which the heat transfer between the battery groups is reduced by the partition wall, since the spread of fire between the battery groups is prevented while reducing the second interval, a lot of secondary battery cells can be disposed in a space-saving manner. The structure in which the partition wall is provided between the battery groups enhances insulating properties between the battery groups. Therefore, in the structure in which the secondary battery cells are connected in series between the battery groups adjacent to each other, there is also a feature that the secondary battery cells connected in series can be effectively insulated from each other to prevent adverse effects such as a short circuit.

In a power supply device according to another aspect of the invention, the battery holder includes holding tubular portions facing each other into which both end portions of the plurality of secondary battery cells are inserted and held, respectively. An air layer is provided between the holding tubular portions to expose respective intermediate portion of the plurality of secondary battery cells.

In the above configuration, since the battery holder includes the holding tubular portions facing each other and that hold the two end portions of the secondary battery cells, and the air layer is provided between the holding tubular portions to expose the intermediate portion of the secondary battery cell, the air layer provided between the secondary battery cells can effectively reduce heat conduction between the adjacent secondary battery cells and effectively prevent the heat from being accumulated.

In a power supply device according to another aspect of the invention, the battery holder further includes an outer peripheral wall disposed along outer peripheries of the holding tubular portions. The outer peripheral wall forms an accommodation space accommodating the plurality of secondary battery cells therein.

In the above configuration, since the battery holder includes the outer peripheral wall formed along the outer peripheries of the holding tubular portions and the accommodation space for the secondary battery cells is formed inside the outer peripheral wall, the peripheries of the secondary battery cells accommodated in the battery holder can be insulated with the outer peripheral wall.

In the power supply device according to another aspect of the invention, the battery holder further includes a partition wall disposed between the battery adjacent groups. The partition wall is integrally formed with the holding tubular portions, both ends of the partition wall are connected to the outer peripheral wall such that the partition wall and the outer peripheral wall form partition chambers accommodating the plurality of battery groups therein.

In the above configuration, since the partition wall disposed between the battery groups adjacent to each other is integrally formed with the holding tubular portion and both ends of the partition wall are connected to the outer peripheral wall, a heat capacity of the partition wall can be increased to effectively prevent the spread of fire between the battery groups. Since the battery groups are accommodated in the partition chambers formed by the partition wall and the outer peripheral wall, the adjacent battery groups can be more reliably insulated from each other.

In a power supply device according to another aspect of the invention, the secondary battery cells of one battery group of the adjacent battery groups is positioned in valleys formed between the secondary battery cells adjacent to each other in another battery group of the adjacent battery groups.

In to the above configuration, although the battery groups are disposed while providing the second interval larger than the first interval between the secondary battery cells between the adjacent battery groups, since the secondary battery cells of one battery group are disposed in the valleys formed between the secondary battery cells of the other battery group, it is possible to reduce an increase in size in an outer shape of the power supply device by disposing a lot of secondary battery cells in a space-saving manner.

In a power supply device according to another aspect of the invention, the plurality of secondary battery cells of each of the battery groups are arranged at the first interval in a row in a diameter direction of the plurality of secondary battery cells. The plurality of battery groups are arranged at the second interval in rows each being the row.

In the above configuration, since the battery groups are arranged in plural rows at the second interval while the secondary battery cells are disposed in a row in the diameter direction at the first interval to form each of the battery groups, in each of the battery groups, the spread of fire between the adjacent secondary battery cells can be effectively prevented by arranging the secondary battery cells in a row, and the spread of fire between the plurality of battery groups can also be effectively prevented to improve safety by arranging the plurality of battery groups at the second interval.

In a power supply device according to another aspect of the invention, the plurality of secondary battery cells of the each battery group are connected in parallel to one another. The plurality of battery groups are connected in series to one another.

In the above configuration, in each of the battery groups, the secondary batteries disposed at the first interval are connected in parallel to one another, and the plurality of battery groups arranged at the second interval larger than the first interval are connected in series to one another, such that the battery groups connected in series can be more reliably insulated from each other, and adverse effects such as short circuit can be effectively prevented. This configuration reduces a short circuit at the time of submersion or electrolytic solution leakage by increasing the interval between the adjacent secondary battery cells between the battery groups connected in series to each other.

In a power supply device according to another aspect of the invention, the plurality of secondary battery cells of the plurality of battery groups includes one or more secondary battery cells adjacent to any one of the plurality of secondary battery cells at the first interval, a number of the one or more secondary battery cell being four or less.

In the above configuration, in the plurality of secondary battery cells constituting each of the battery groups, since the number of secondary battery cells disposed adjacent to each other at the first interval with respect to any secondary battery cell is four or less, even if any secondary battery cell generates heat, the number of adjacent secondary battery cells disposed at the first interval with respect to the heat generating battery cell, in other words, disposed closest to the heat generating battery cell is four or less, and it is possible to effectively prevent heat from being accumulated around the heat generating secondary battery cell and effectively prevent the spread of fire in the battery group.

In the power supply device according to another aspect of the invention, the first interval (d1) is 8% to 15% of an outer diameter of each of the plurality of secondary battery cells. The second interval (d2) is 1.5 to 2.5 times the first interval (d1).

Exemplary Embodiments of the invention will be described below with reference to the drawings. The embodiments described below are examples for embodying the technical idea of the invention, and the invention is not limited to the following. The present description does not specify members described in the claims as members in the embodiments. Dimensions, materials, shapes, relative dispositions, and the like of the components described in the embodiments are merely examples without limiting the scope of the invention thereto unless otherwise specified. Sizes, positional relationships, and the like of members illustrated in the drawings may be exaggerated for clarity of description. In the following description, the same names and reference numerals denote the same or similar members, and detailed description thereof will be omitted as appropriate. In the elements constituting the invention, a plurality of elements may be constituted by the same member, and the plurality of elements may be shared by one member. Conversely, a function of one member can be shared by a plurality of members.

The power supply device according to the invention is suitable for use as a power supply for a power storage system for homes, businesses, and factories in a stationary power storage application, or a backup power supply for servers, or a power supply for vehicles such as hybrid vehicles and electric vehicles. Hereinafter, a power supply device used as a power supply of a power storage system will be described as an embodiment of the invention.

### Exemplary Embodiment 1

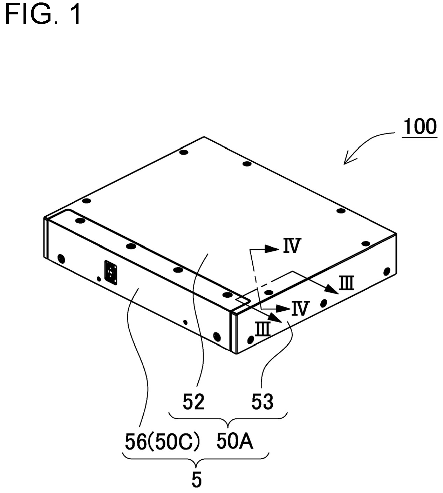

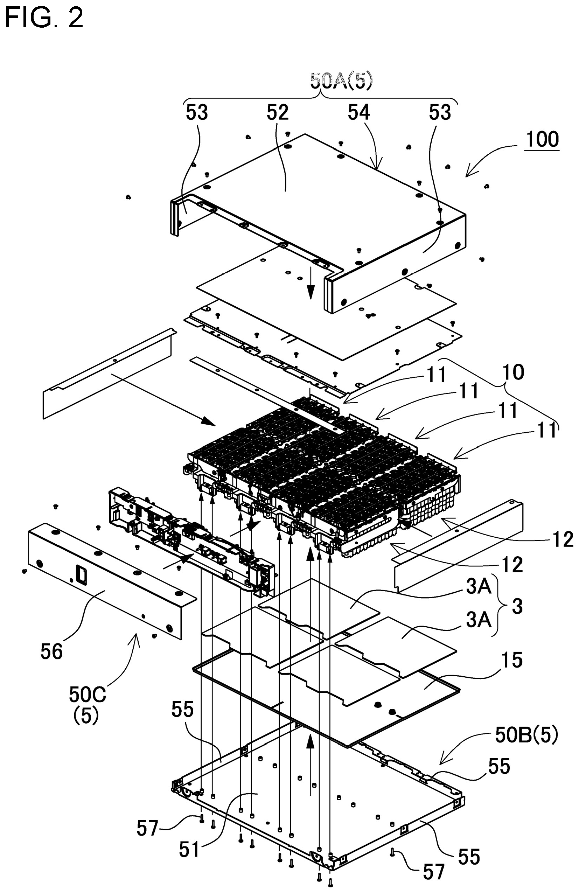

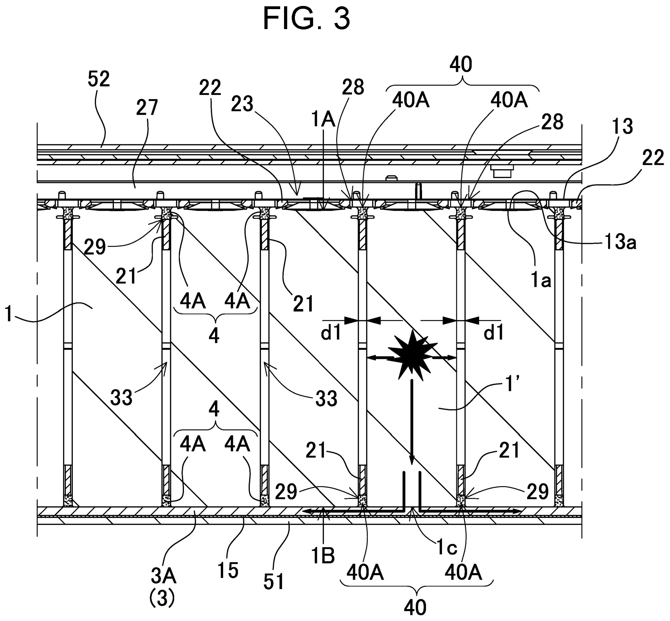

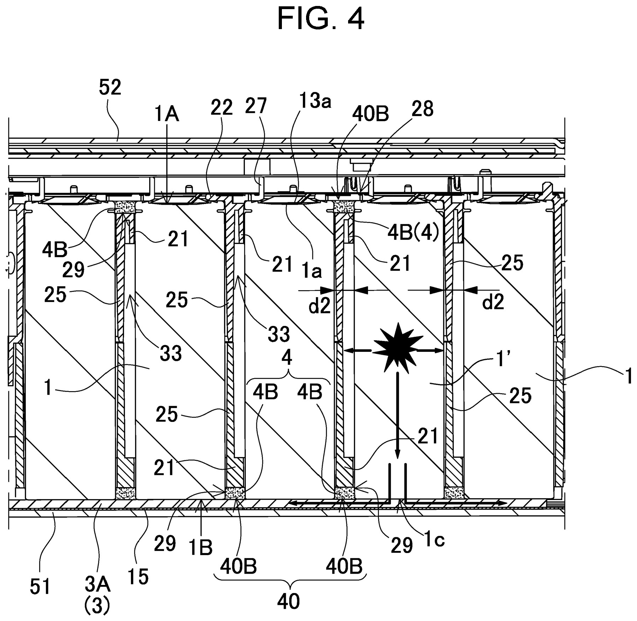

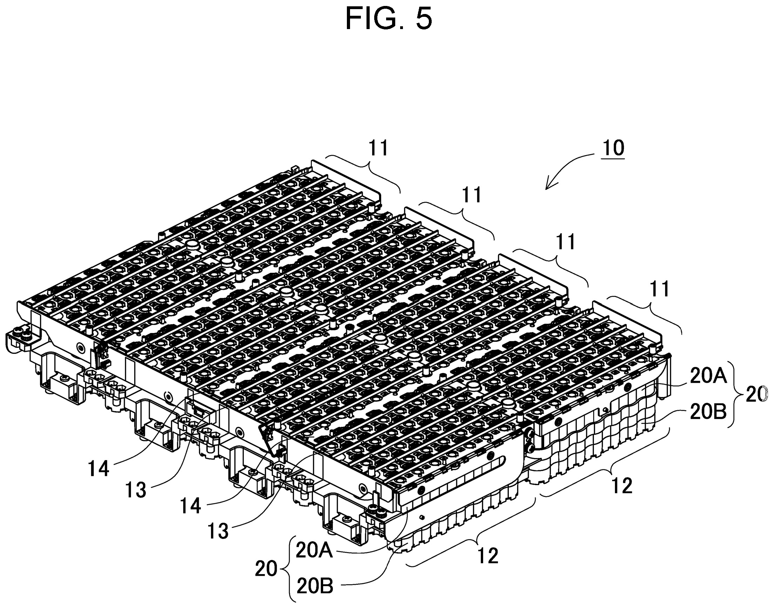

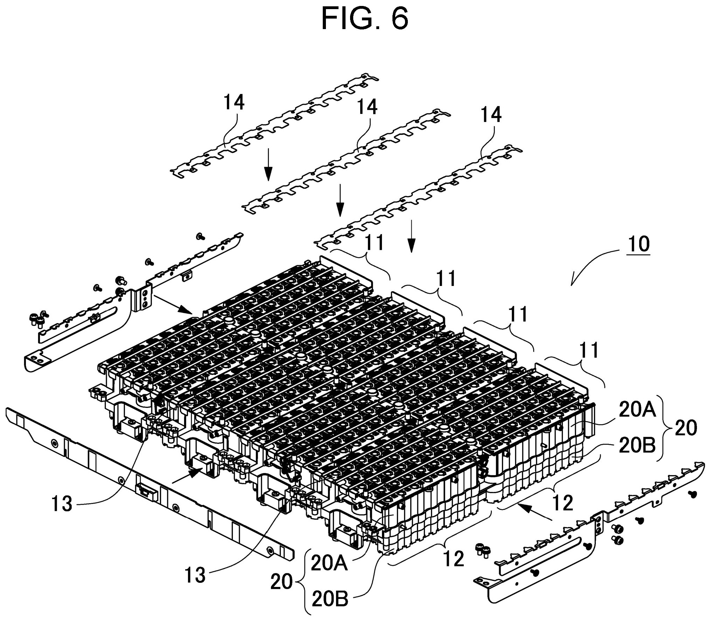

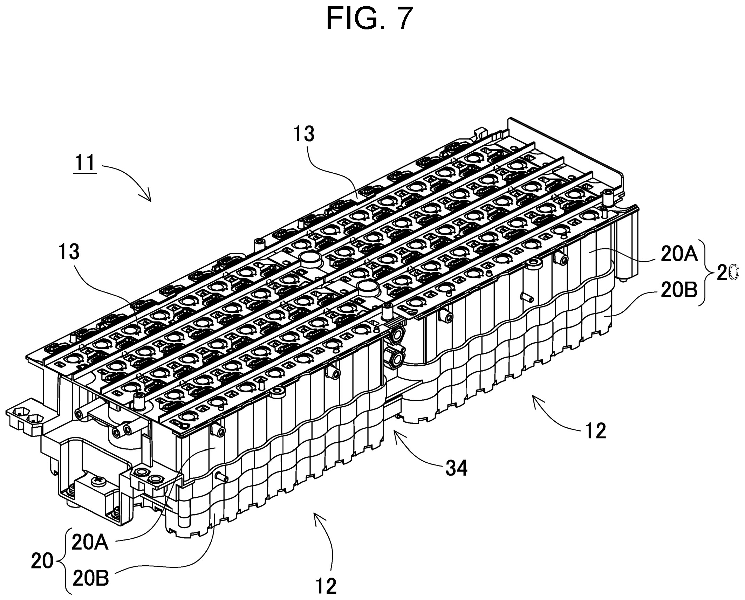

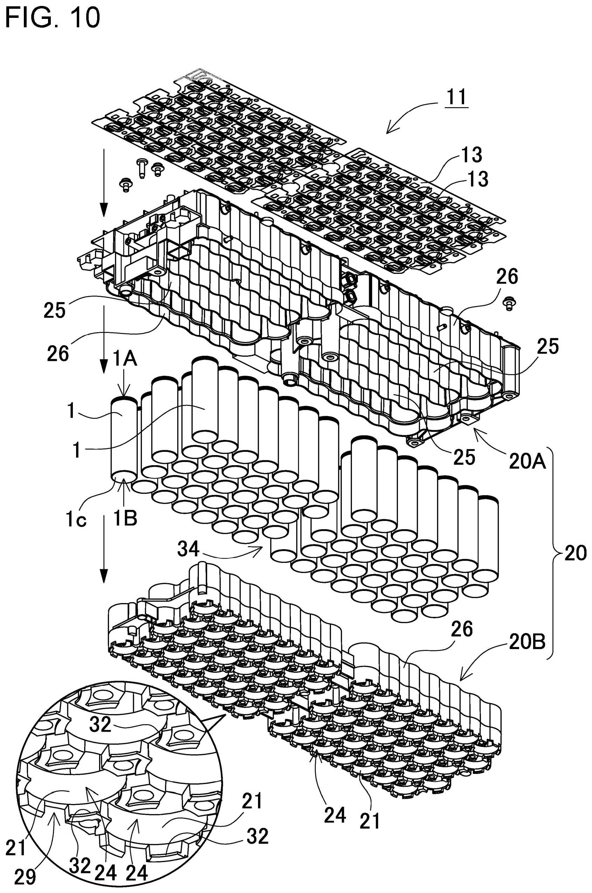

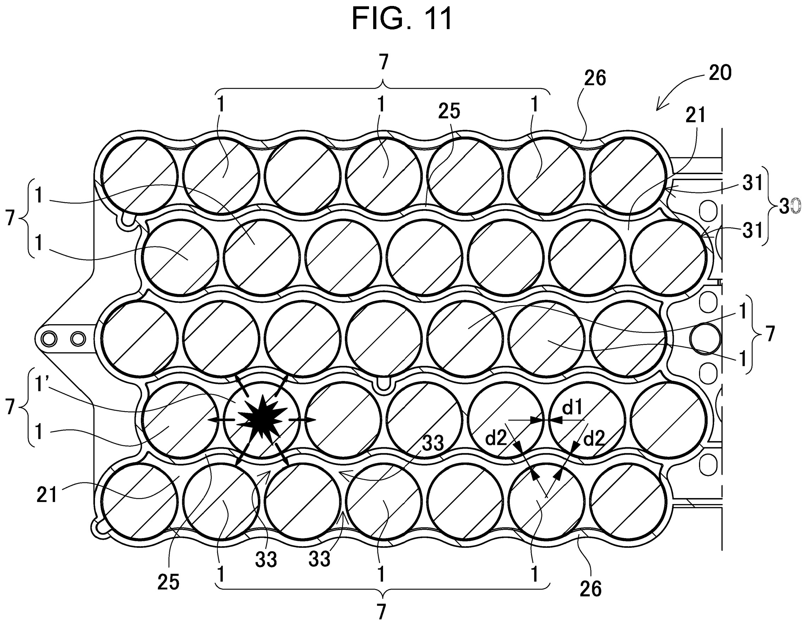

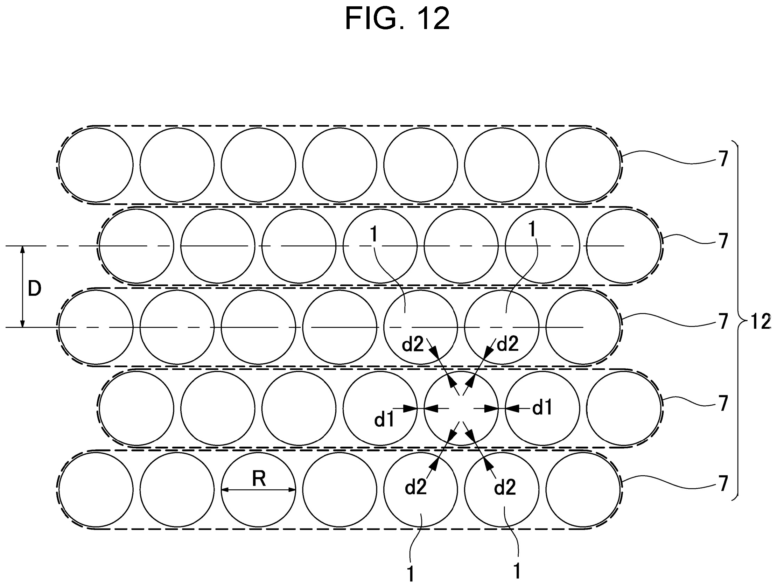

A power supply device according to Exemplary Embodiment 1 of the invention is illustrated in FIGS. 1 to 9. FIG. 1 is a perspective view of the power supply device according to Embodiment 1. FIG. 2 is an exploded perspective view of the power supply device shown in FIG. 1. FIG. 3 is a vertical cross-sectional view of the power supply device along line III-III shown in FIG. 1. FIG. 4 is a vertical cross-sectional view of the power supply device along line IV-IV shown in FIG. 1. FIGS. 5 and 6 are a perspective view and an exploded perspective view of a battery assembly. FIGS. 7 to 9 are a perspective view, a plan view, and an exploded perspective view of a battery block. FIG. 10 is an exploded perspective view of the power supply device shown in FIG. 7 viewed from below. FIG. 11 is a horizontal cross-sectional view of a battery unit. FIG. 12 is a schematic arrangement diagram of secondary battery cells constituting the battery unit.

Power supply device 100 illustrated in these drawings includes: a battery assembly 10 including a plurality of secondary battery cells 1; an exterior case 5 accommodating the battery assembly 10 therein; and a heat-conductive member 6 stacked between the battery assembly 10 and the exterior case 5 and thermally coupled to the plurality of secondary battery cells 1. The plurality of secondary battery cells 1 are cylindrical batteries. The battery assembly 10 further includes a battery holder 20 disposing the plurality of secondary battery cells 1 parallel to one another in multiple stages and rows such that both end surfaces of each of the plurality of secondary battery cells 1 in a longitudinal direction of the each of the plurality of secondary battery cells 1 are disposed on same planes, respectively, and that one end surface of the both end surfaces of the each of the plurality of secondary battery cells 1 is exposed, as a heat conduction surface 1c, from the battery holder 20 and is thermally coupled to the heat-conductive member 6. The plurality of secondary battery cells 1 constitute a plurality of battery groups 2, each battery group 2 of the plurality of battery groups 2 including the plurality of secondary battery cells 1 disposed at a predetermined first interval (d1) between adjacent secondary battery cells 1 of the plurality of secondary battery cells 1 constituting the each battery group 2, the plurality of battery groups 2 being disposed at a second interval (d2) between secondary battery cells 1 of adjacent battery groups 2 of the plurality of battery groups 2, the second interval (d2) being larger than the first interval (d1). The heat-conductive member has a sheet shape or a plate shape, and is thermally coupled to the plurality of secondary battery cells 1 across the plurality of battery groups.

### Battery Assembly 10

Battery assembly 10 includes battery blocks 11 connected to one another. Battery assembly 10 illustrated in FIGS. 5 and 6 includes four battery blocks 11 disposed in a front-rear direction in the drawing. As illustrated in FIGS. 7 to 10, each battery block 11 includes two battery units 12 divided into left and right. Each battery unit 12 includes 35 secondary battery cells 1 disposed therein. Entire battery block 11 includes 70 secondary battery cells 1 disposed at fixed positions therein. Therefore, entire battery assembly 10 includes 280 (70 × 4 sets) secondary battery cells 1. Each battery block 11 is partitioned into two battery units 12 via partition gap 34. The number of secondary battery cells 1 included in battery assembly 10 is set to an optimum number in consideration of, e.g., an application of the power supply device, a charge and discharge capacity, a maximum load current, and a capacity of each battery cell, and may be, for example, several hundreds. In battery assembly 10, the number of secondary battery cells 1 connected in series to one another is increased to increase an output voltage, and the number of secondary battery cells 1 connected in parallel to one another is increased to increase a maximum current supplied to a load and the charge and discharge capacity of entire battery assembly 10.

### Battery Group 2

The plurality of secondary battery cells 1 are held in a predetermined posture by battery holder 20, and are held such that intervals between secondary battery cells 1 adjacent to each other are predetermined intervals. As illustrated in FIGS. 11 and 12, the plurality of secondary battery cells 1 constitute a plurality of battery groups 2. Each of battery groups 2 includes secondary battery cells 1 disposed at a predetermined first interval (d1) between secondary battery cells 1 adjacent to each other. The plurality of battery groups 2 are disposed with a second interval (d2) larger than the first interval (d1) between battery groups 2 adjacent to each other. FIG. 12 illustrates only secondary battery cells 1 to facilitate understanding of a positional relationship between the plurality of secondary battery cells 1.

In battery unit 12 illustrated in FIGS. 11 and 12, the plurality of secondary battery cells 1 are disposed in a row in a diameter direction of each secondary battery cell at the first intervals (d1) to form battery group 2. Further, in battery unit 12, the battery groups are disposed in a plurality of rows such that secondary battery cells 1 adjacent to each other in battery groups 2 adjacent to each other are disposed at the second interval (2). Adjacent battery groups 2 are disposed such that secondary battery cells 1 of one battery group 2 of adjacent battery groups 2 are positioned in valleys formed between secondary battery cells 1 adjacent to each other in another battery group 2 of adjacent battery groups 2. That is, in the plurality of rows of battery groups 2 arranged in a front-rear direction, adjacent battery groups 2 are shifted in a left-right direction, and in battery groups 2 adjacent to each other, protruding curved surfaces of secondary battery cells 1 in one battery group 2 are arranged to be positioned in valleys formed between secondary battery cells 1 in another battery group 2.

Battery block 11 illustrated in FIGS. 7 to 12 includes two battery units 12, and in each battery unit 12, seven secondary battery cells 1 are arranged in a row in the left-right direction to form battery group 2, and five battery groups 2 are arranged in five rows in the front-rear direction. In each battery group 2, seven secondary battery cells 1 are arranged in a row at an equal interval of the predetermined first interval (d1). Secondary battery cells 1 adjacent to each other are disposed at the second interval (d2) between battery groups 2 adjacent to each other in the front-rear direction. The second interval (d2) is larger than the first interval (d1). In this configuration, when any of secondary battery cells 1 generates heat, secondary battery cells 1 arranged at the first interval (d1) closest to heat generating battery cell 1' are only two secondary battery cells 1 arranged on both sides thereof. Secondary battery cells 1 are arranged at the second interval (d2) between the adjacent battery groups 2 and the second interval (d2) is larger than the first interval (d1), so that heat is prevented from being accumulated around heat generating battery cell 1' and heat transfer between battery groups 2 is reduced.

In each battery group 2, the first interval (d1) provided between adjacent secondary battery cells 1 may be 8% to 15% of an outer diameter (R) of secondary battery cell 1. The second interval (d2) provided between adjacent secondary battery cells 1 of adjacent battery groups 2 may be 1.5 to 2.5 times the first interval (d1). As illustrated in FIGS. 11 and 12, the plurality of secondary battery cells 1 are arranged in a row in a diameter direction of the cells to form battery group 2, and a plurality of battery groups are arranged in a plurality of rows in the front-rear direction. This configuration, an interval (D) between center lines of the adjacent battery groups in the front-rear direction is larger than an outer shape (R) of secondary battery cell 1.

### Secondary Battery Cell 1

In power supply device 100 illustrated in FIGS. 1 and 2, the plurality of secondary battery cells 1 are collected in a predetermined arrangement to constitute battery assembly 10 accommodated in exterior case 5. Secondary battery cell 1 is a cylindrical battery. In secondary battery cell 1 which is a cylindrical battery, although not illustrated, an electrode body is accommodated in a bottomed cylindrical outer can made of metal and filled with an electrolytic solution, and an opening of an outer can is crimped to be airtightly closed with a sealing body. In secondary battery cell 1, the sealing body and the outer can function as are positive and negative electrodes, respectively. In secondary battery cell 1, an end surface closed by the sealing body is first end surface 1A, and a bottom surface of the outer can is second end surface 1B. In first end surface 1A of secondary battery cell 1, a central portion of the sealing plate insulated by an insulator, such as a gasket, functions as center electrode 1a, and a ring-shaped crimped portion formed on an outer peripheral portion of the sealing plate functions as outer peripheral electrode 1b. In secondary battery cell 1, second end surface 1B is thermal-coupling surface 1c that is thermally coupled to heat-conductive member 6.

As such secondary battery cell 1, a non-aqueous electrolyte secondary battery having high energy efficiency, for example, a lithium-ion secondary battery can be suitably used. The power supply device according to the invention does not identify the secondary battery cell as a lithium-ion secondary battery. As the secondary battery cell, any rechargeable battery, for example, a secondary battery such as a nickel-metal hydride battery, a nickel-cadmium battery, or an all-solid-state battery can be used.

### Battery Holder 20

The plurality of secondary battery cells 1 are disposed at the fixed positions in a predetermined posture via battery holder 20. Battery holder 20 disposes secondary battery cells 1 in an upright orientation such that first end surface 1A of the cell closed by the sealing body faces upward in the diagram, and second end surface 1B of the cell which is the bottom surface of the outer can faces downward, and the cells are positioned parallel to each other. Battery holder 20 holds first end surfaces 1A and second end surfaces 1B which are two end surfaces of secondary battery cells 1 to be disposed on same planes, respectively. Battery holder 20 includes holding tubular portions 21 accommodating secondary battery cells 1 inside, respectively, and holds two end portions of secondary battery cells 1 in the longitudinal direction of the cell, and holds secondary battery cells 1 at fixed positions at predetermined intervals via holding tubular portions 21. Holding tubular portion 21 has a tubular shape along the outer peripheral surface of secondary battery cell 1, an inner shape of holding tubular portion 21 is substantially equal to the outer shape of secondary battery cell 1, and inserted secondary battery cell 1 is held at a fixed position without positional shift. Battery holder 20 is preferably made of a material having high insulating properties and heat resistance, for example, resin such as polycarbonate or ABS.

Battery holder 20 illustrated in FIGS. 7 to 11 includes holding tubular portions 21 to accommodate the plurality of secondary battery cells 1 therein in an arrangement that approximates a stacked arrangement when viewed from above. In the arrangement structure illustrated in the drawing, secondary battery cells 1 in adjacent rows are disposed in the valleys formed between secondary battery cells 1 arranged in one row in a diameter direction of the cells in a plan view, so that a lot of secondary battery cells 1 can be accommodated in a space-saving manner and the interval between the adjacent rows of the cells can be widened. Therefore, battery holder 20 increases the interval between the adjacent battery rows while efficiently accommodating a lot of secondary battery cells 1 and provides a high capacity.

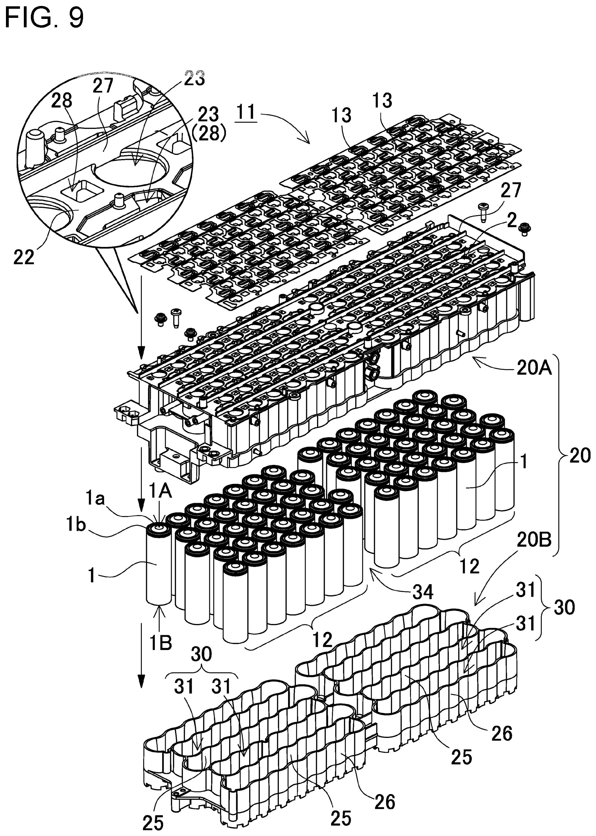

Battery holder 20 shown in FIGS. 3, 4, 9, and 10 includes first divided holder 20A and second divided holder 20B divided at an intermediate portion of secondary battery cell 1 in the longitudinal direction of the cell. First divided holder 20A includes holding tubular portions 21 holding end portions of secondary battery cells 1 on first end surface 1A, respectively. Holding tubular portions 21 of first divided holder 20A are connected to one another in multiple stages and rows, and closes tip ends of holding tubular portions 21 with surface plate 22. As illustrated in FIG. 9, surface plate 22 has electrode windows 23 provided therein to expose positive and negative electrodes provided on first end surface 1A of secondary battery cell 1 through electrode windows 23, respectively.

Second divided holder 20B includes holding tubular portions 21 that hold end portions of secondary battery cells 1 on second end surface 1B, respectively. Holding tubular portions 21 of second divided holder 20B are connected to one another in multiple stages and rows. Second divided holder 20B has opening windows 24 provided therein to expose heat conduction surfaces 1c of secondary battery cells 1 through openings provided at tip ends (lower ends in the drawing) of holding tubular portions 21, respectively. In second divided battery holder 20B illustrated in FIGS. 3 and 4, in order to expose heat conduction surface 1c of secondary battery cell 1 in a wide area, an inner diameter of opening window 24 is substantially equal to the outer diameter of secondary battery cell 1, and in order to prevent secondary battery cell 1 from falling off, as illustrated in FIG. 10, stoppers 32 protrude inward of the opening window are provided at an opening edge of opening window 24. Second divided holder 20B having the above structure prevents secondary battery cells 1 from passing through by stoppers 32 provided on the opening edge of opening window 24 while exposing heat conduction surface 1c, which is the bottom surface of the secondary battery cell 1, through opening window 24.

Each of first divided holder 20A and second divided holder 20B further includes outer peripheral wall 26 formed along outer peripheries of holding tubular portions 21 connected to one another in multiple stages and rows. First divided holder 20A and second divided holder 20B are connected to each other at facing surfaces of outer peripheral walls 26 of holders 20A and 20B, and form accommodation space 30 for accommodating secondary battery cells 1 inside outer peripheral wall 26. In this configuration, peripheries of secondary battery cells 1 accommodated in battery holder 20 are insulated by outer peripheral walls 26. Battery holder 20 described above holds secondary battery cells 1 at fixed positions while sandwiching the secondary battery cells 1 from two end sides such that two end portions of the secondary battery cell 1 are held by holding tubular portions 21 of first divided holder 20A and second divided holder 20B.

As described above, in battery holder 20 accommodating secondary battery cells 1 in accommodation space 30, a hollow portion is provided between holding tubular portion 21 of first divided holder 20A and holding tubular portion 21 of second divided holder 20B that hold two end portions of secondary battery cell 1 not to cover the entire intermediate portion of secondary battery cell 1 to expose the entire intermediate portion. As described above, the intermediate portions of the plurality of secondary battery cells 1 are exposed to provide air layer 33 between adjacent secondary battery cells 1. Air has much lower thermal conductivity than other substances. Therefore, the structure in which air layer 33 is provided between adjacent secondary battery cells 1 effectively reduces heat conduction between adjacent secondary battery cells 1.

Battery holder 20 illustrated in FIGS. 4 and 9 to 11 further includes partition wall 25 disposed between battery groups 2 adjacent to each other. Partition wall 25 is formed integrally with holding tubular portion 21. In battery holder 20, partition wall 25 and air layer 34 are provided between battery groups 2 adjacent to each other as illustrated in FIG. 11. As described above, partition wall 25 provided between the adjacent battery groups 2 effectively reduces heat transfer between secondary battery cells 1 disposed at the second interval (d2) between battery groups 2, and reliably prevents spread of fire between battery groups 2. Partition wall 25 provided between battery groups 2 has high insulating properties between battery groups 2. Therefore, as detailed later, in secondary battery cells 1 connected in series to one another between battery groups 2 adjacent to each other, secondary battery cells 1 connected in series to one another are effectively insulated from one another to prevent adverse effects such as a short circuit.

In battery holder 20 illustrated in the drawing, both ends of partition wall 25 are connected to outer peripheral wall 26, and partition wall 25 and outer peripheral wall 26 surround the periphery of battery group 2 to form partition chamber 31 for accommodating battery group 2 therein. This configuration allows battery groups 2 to be disposed while being reliably insulated from one another by partition wall 25 and outer peripheral wall 26 surrounding battery groups 2, and enhances the battery holder by partition wall 25 connected to outer peripheral wall 26. Partition wall 25 illustrated in FIGS. 4 and 11 is disposed while one side surface of the wall is close to secondary battery cell 1 of the adjacent battery group 2. Therefore, when any of secondary battery cells 1 generates heat, the heat of heat generating battery cell 1' can be conducted to partition wall 25 and dissipated by the heat capacity of partition wall 25.

Although battery holder 20 described above includes partition wall 25 disposed between battery groups 2 adjacent to each other, partition wall 25 may be disposed between secondary battery cells 1 constituting each battery group 2. Further, the partition wall may be omitted from the battery holder. The battery holder not including the partition wall reduces the heat conduction by providing an air layer between the secondary battery cells adjacent to each other.

### Lead Plate 13

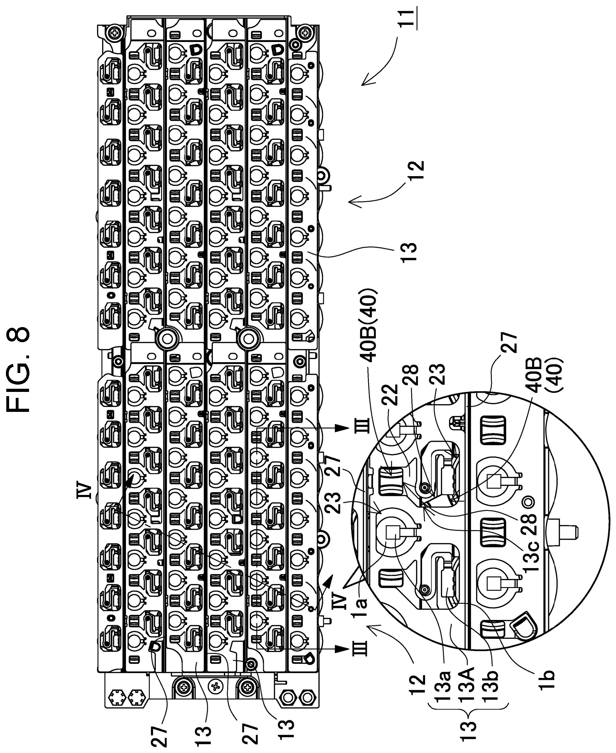

As illustrated in FIGS. 7 to 9, the plurality of secondary battery cells 1 accommodated in battery holder 20 are connected to one another via lead plate 13 on surface plate 22 of battery holder 20. Lead plate 13 connects positive and negative electrodes on first end surface 1A of secondary battery cell 1 to connect the plurality of secondary battery cells 1 in parallel and in series to one another . In secondary battery cell 1 illustrated in a partially enlarged view of FIG. 8, one electrode is center electrode 1a disposed in the central portion of the sealing body, and the other electrode is outer peripheral electrode 1b constituted by the crimped portion provided on the outer peripheral portion of first end surface 1A. Battery block 11 illustrated in FIGS. 7 to 9 includes lead plates 13 disposed on an upper surface of battery holder 20 along linearly disposed battery groups 2 between battery units 12 adjacent to each other in the left-right direction. Lead plate 13 disposed across battery groups 2 adjacent to each other in the front-rear direction has a structure in which secondary battery cells 1 of one battery group 2 disposed linearly are connected in parallel to one another, secondary battery cells 1 of the other battery group 2 are connected in parallel to one another, and adjacent battery groups 2 are connected in series to one another.

Lead plate 13 illustrated in the partially enlarged view of FIG. 8 includes main body portion 13A extending in an extending direction of battery group 2 arranged in the left-right direction, first connection tab 13a protrudes from main body portion 13A and is connected to center electrode 1a of each secondary battery cell 1 of battery group 2 facing main body portion 13A, and second connection tab 13b protrudes from main body portion 13A and is connected to outer peripheral electrode 1b of each secondary battery cell 1 of adjacent battery group 2. Insulating wall 27 insulating adjacent lead plates 13 from each other is provided between lead plates 13, and insulating wall 27 is disposed above first end surface 1A of each secondary battery cell 1 constituting battery group 2 to be unevenly distributed from center electrode 1a, thereby preventing a short circuit between secondary battery cells 1 connected in series to one another. Electrode windows 23 exposing center electrode 1a and outer peripheral electrode 1b of secondary battery cell 1 open on both sides of insulating wall 27.

As described above, each of lead plates 13 disposed between two rows of adjacent battery groups connects 14 secondary battery cells 1, to each other, constituting two battery groups 2 linearly disposed across battery unit 12 in parallel to each other, and connects battery groups 2 disposed adjacent to each other in series to connect 70 secondary battery cells 1 in a 14-parallel and 5-series configuration in entire battery block 11. Further, adjacent battery blocks 11 are connected in series to one another with connection bus bars 14. In entire battery assembly 10, 280 secondary battery cells 1 are connected to one another in a 14-parallel and 20-series configuration. Lead plate 13 and connection bus bar 14 are made of a metal plate, such as a nickel or aluminum plate, having high conductivity. In the invention, secondary battery cells 1 are connected in parallel and in series to one another by connecting the positive and negative electrodes while first end surfaces 1A of secondary battery cells 1 are on the same plane, whereas a connection state of the plurality of secondary battery cells is not limited thereto. In the battery assembly, the number and disposition of the secondary battery cells constituting each battery block may be variously changed, and disposition of the plurality of battery blocks can be variously changed.

### Adhesive 4

In battery assembly 10, the plurality of secondary battery cells 1 held at fixed positions by battery holder 20 are fixed between secondary battery cells 1 adjacent to each other with adhesive 4 having flame retardancy to be held at predetermined intervals. As adhesive 4 having such flame retardancy, for example, a silicone-based, epoxy-based, or zirconia-silica-based adhesive can be used. Since the silicone-based, epoxy-based, or zirconia-silica-based adhesive 4 does not burn off or melt but is only carbonized even when being exposed to high temperature heat, adjacent secondary battery cells 1 can be continuously fixed even under a high temperature. As described above, in secondary battery cells 1 adjacent to each other fixed to each other with adhesive 4 having flame retardancy, even when an unsafe event occurs in any of secondary battery cells 1, a failure such as heat generation or ignition occurs, and battery holder 20 made of resin is heated to a high temperature and melted, adhesive 4 is not lost by burning or melting, thereby allowing secondary battery cells 1 to be held at predetermined intervals. Therefore, even when battery holder 20 is melted, it is possible to reliably prevent adverse effects such as irregular falling of accommodated secondary battery cells 1 and improve safety.

In secondary battery cells 1 adjacent to each other fixed to each other with adhesive 4, for example, both end portions of secondary battery cells 1 in the longitudinal direction are bonded between secondary battery cells 1 adjacent to each other, so that secondary battery cells 1 can be more reliably fixed continuously. Battery assembly 10 illustrated in FIGS. 3 and 4 indicates a state in which the end portions of secondary battery cells 1 are fixed at the upper portion of first divided holder 20A and the lower end portion of second divided holder 20B.

In first divided holder 20A illustrated in FIGS. 3 and 4, in order to cause adhesive 4 to fill a space between the adjacent secondary battery cells 1 at the end portion on first end surface 1A of secondary battery cell 1, boundary windows 28 are provided in surface plate 22 between secondary battery cells 1 adjacent to each other. Further, in first divided holder 20A, portions of holding tubular portions 21 exposed from boundary window 28 opening in surface plate 22 are partially cut out to form cutout portion 29 having a groove shape that exposes the side surfaces of the secondary battery cells 1 facing each other through the cutout portion, and filling recess 40 to be filled with adhesive 4 is formed between the side surfaces of secondary battery cells 1 disposed on both sides of cutout portion 29.

First divided holder 20A illustrated in FIGS. 3 and 4 has boundary window 28 provided between secondary battery cells 1 constituting battery group 2 and boundary window 28 provided between secondary battery cells 1 adjacent to each other between battery groups 2 adjacent to each other. In FIG. 9, boundary window 28 provided between adjacent battery groups 2 is also used as electrode window 23 for connecting second connection tab 13b of lead plate 13 to outer peripheral electrode 1b of secondary battery cell 1.

In second divided holder 20B illustrated in FIG. 10, holding tubular portions 21 positioned between secondary battery cells 1 adjacent to each other are partially cut out at an opening edge of opening window 24 to form cutout portion 29 having a grove shape that exposes the side surfaces of the secondary battery cells 1 facing each other through the cutout portion. As illustrated in FIGS. 3 and 4, filling recess 40 to be filled with adhesive 4 is formed between the side surfaces of secondary battery cells 1 disposed on both sides of cutout portion 29. As illustrated in FIG. 10, filling recess 40 is provided at a position shifted from stopper 32 provided at the opening edge to prevent secondary battery cell 1 from falling off.

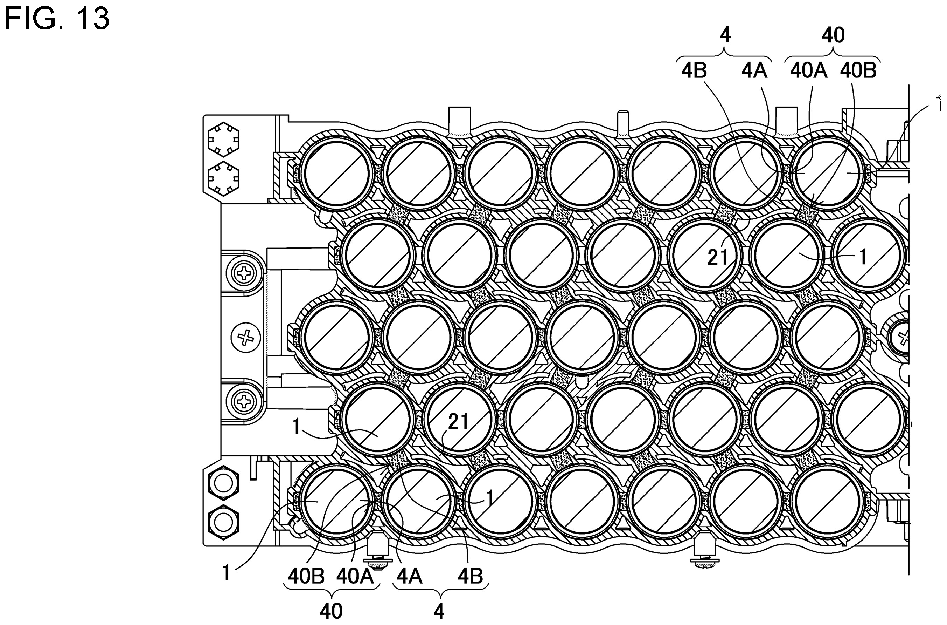

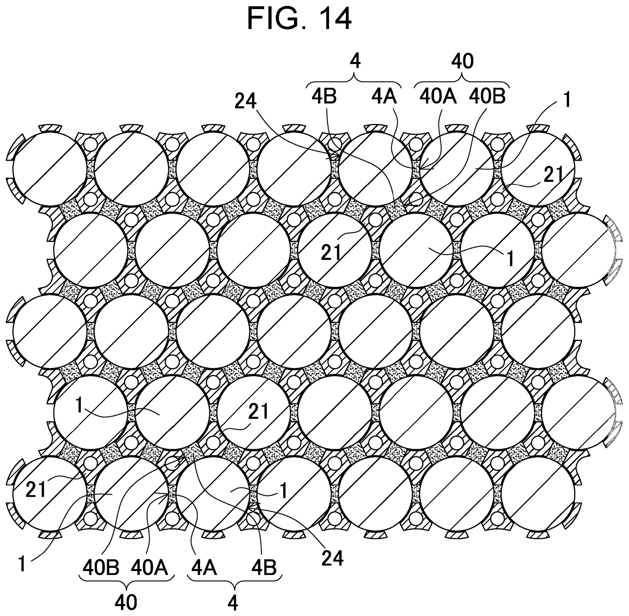

As described above, filling recess 40 formed in first divided holder 20A and second divided holder 20B includes first filling recess 40A formed between secondary battery cells 1 constituting one battery group 2 and second filling recess 40B formed between adjacent secondary battery cells 1 of battery groups 2 adjacent to each other. Battery holder 20 holds secondary battery cells 1 constituting one battery group 2 at the first interval (d1) via first adhesive portion 4A formed of adhesive 4 filling first filling recess 40A, and holds secondary battery cells 1 adjacent to each other between adjacent battery groups 2 at the second interval (d2) via second adhesive portion 4B formed of adhesive 4 filling second filling recess 40B. FIG. 13 illustrates a state in which the upper end portions of secondary battery cells 1 are fixed with first adhesive portion 4A and second adhesive portion 4B. FIG. 14 illustrates a state in which the lower end portions of the plurality of secondary battery cells 1 are fixed by first adhesive portion 4A and second adhesive portion 4B. These drawings do not show members other than secondary battery cell 1, adhesive 4, and battery holder 20 in order to facilitate understanding of the fixing state of secondary battery cell 1 by adhesive 4. As illustrated in these drawings, secondary battery cells 1 are reliably held at predetermined intervals by fixing secondary batteries 1 adjacent to each other with adhesive 4.

On first end surface 1A of secondary battery cell 1, adhesive 4 fixing adjacent secondary batteries 1 to each other may fill filling recess 40 as a pre-process for fixing lead plate 13, and preferably fill filling recess 40 after fixing lead plate 13. This process eliminates contact failure due to the adhesive adhering to the vicinity of the electrodes of secondary battery cell 1 when adhesive 4 fills. Since adhesive 4 fills it after lead plate 13 is connected, adhesive 4 adheres to lead plate 13, and thus lead plate 13 can be fixed to a fixed position of secondary battery cell 1 or battery holder 20. Therefore, lead plate 13 opens opening 13c for exposing boundary window 28 while being connected to secondary battery cell 1.

### Heat-Conductive Member 3

Heat-conductive member 3 is stacked between battery assembly 10 and exterior case 5, and is thermally coupled to secondary battery cells 1 accommodated in battery holder 20. As illustrated in FIGS. 3 and 4, heat conduction surface 1c of each secondary battery cell 1 accommodated in battery holder 20, which is second end surface 1B, is exposed on the lower surface of battery holder 20, and heat-conductive member 3 makes surface contact with heat conduction surface 1c to be thermally coupled to heat conduction surface 1c. Heat-conductive member 3 has a sheet shape or a plate shape, and is thermally coupled across battery groups 2, thereby diffusing the heat dissipated from heat conduction surface 1c of heat generating battery cell 1' to the surroundings to efficiently dissipate the heat.

As the heat-conductive member 3 with the sheet shape, for example, heat-conductive sheet 3A can be used. Heat-conductive sheet 3A is a sheet material having high heat conductivity and insulating properties, and preferably has a certain degree of elasticity. Examples of such a material include acrylic-based, urethane-based, epoxy-based, and silicone-based resins. As heat-conductive sheet 3A, for example, an elastically deformable cushion sheet of 1 mm to 3 mm having excellent heat conductivity can be used. Heat-conductive sheet 3A is sandwiched between secondary battery cell 1 and bottom surface plate 51 while being crushed while bottom surface plate 51 of exterior case 5 is connected to battery holder 20 of battery assembly 10, and an upper surface thereof closely contacts heat conduction surface 1c of secondary battery cell 1. Bottom surface plate 51 closely contact each secondary battery cell 1 to be thermally coupled to each cell via heat-conductive sheet 3A to efficiently dissipate heat from secondary battery cells 1. As heat-conductive sheet 3A, a property of efficiently conducting heat between secondary battery cell 1 and bottom surface plate 51, for example, a silicon resin sheet, a plastic sheet filled with filler having high heat conductivity, and mica is used. As the filler having high heat conductivity, ceramic filler or metal filler can be mixed to the resin. Further, heat conductive paste, such as silicone oil, filling between heat-conductive sheet 3A and secondary battery cell 1 provides a structure capable of more efficiently conducting heat.

Heat-conductive member 3 illustrated in FIG. 2 includes four heat-conductive sheets 3A divided into four for the entire bottom surface of battery assembly 10. In the structure, battery holder 20 of each battery block 11 can be reliably fixed to bottom surface plate 51 via fixing screw 57, and can be disposed to be thermally coupled to secondary battery cells 1 across secondary battery cells 1 constituting the plurality of battery groups 2. As illustrated in FIG. 2, each of heat-conductive sheets 3A faces two battery units 12 extending between battery blocks 11 adjacent to each other among four battery blocks 11 constituting battery assembly 10. In the structure, when any of the secondary battery cells generates heat, the heat of heat generating battery cell 1' can be dissipated by being thermally conducted across adjacent battery blocks 11. However, the heat-conductive sheet may face all of the four battery blocks as one sheet, may face two battery blocks as two sheets, or may face each battery unit as eight sheets. The size and the number of divisions of the heat-conductive sheet can be variously changed. As illustrated in FIG. 2, heat-conductive sheet 3A is stacked on bottom surface plate 51 via insulating sheet 15 having heat conductivity.

### Exterior Case 5

As illustrated in FIGS. 1 to 6, exterior case 5 has a box shape having a hollow inside accommodating battery assembly 10 therein. Exterior case 5 illustrated in the drawing made of metal plates combined with one another. In the example illustrated in exploded perspective views of FIG. 2, exterior case 5 has an entire outer shape of a box shape by connecting bottom surface plate 51 to top surface plate 52 facing bottom surface plate 51 with side surface plates 53 on both sides and end surface plates 54 and 56 on both ends.

Exterior case 5 illustrated in FIGS. 1 and 2 includes first case 50A, second case 50B, and third case 50C. First case 50A includes top surface plate, side surface plates 53 connected to both sides of top surface plate 52, and end surface plate 54 connected to one end of top surface plate 52. Second case 50B includes bottom surface plate 51 and fixing pieces 55 provided on both sides and one end of bottom surface plate 51. Fixing pieces 55 fix side surface plates 53 and end surface plate 54 of first case 50A. Third case 50C includes closing plate 56 disposed on an end surface of first case 50A opposite to end surface plate 54. Exterior case 5 has an entire outer shape of a box shape formed by these cases connected to one another.

In power supply device 100 described above, the plurality of battery groups 2 each including the plurality of secondary battery cells 1 disposed at the first interval (d1) are disposed at the second interval (d2) larger than the first interval (d1). Heat-conductive member 3 is thermally coupled to the battery cells across the plurality of battery groups 2 with one end surface of secondary battery cell 1 as heat conduction surface 1c to conduct the heat of heat generating battery cell 1' to heat-conductive member 3 and dissipate the heat in a wide range. The above synergistic effects prevent the heat from being accumulated around heat generating battery cell 1' and heating to a high temperature, and prevent a chain reaction of spread of fire to adjacent secondary battery cells 1. Further, in power supply device 100 described above, the second interval (d2) larger than the first interval (d1) is provided and disposed between the adjacent secondary battery cells 1 between the adjacent battery groups, whereas in each battery group 2, the first interval (d1) narrower than the second interval (d2) is provided between the adjacent secondary battery cells 1, so that a lot of secondary battery cells 1 are disposed in a small space, thus reducing the size of the outer shape of power supply device 100.

It was verified that the arrangement of secondary battery cells 1 in the present embodiment allowed a lot of secondary battery cells 1 in a space-saving manner while increasing the interval between secondary battery cells 1 between battery groups 2 as follows.

### Comparative Example 1

In an arrangement where seven secondary battery cells with an outer diameter (R) of 21 mm are arranged in a row in the left-right direction to form a battery row, and these battery rows are arranged in five rows in the front-rear direction, the secondary battery cells are positioned in a stacked arrangement such that an interval between all secondary battery cells adjacent to each other is 2 mm, and the centers of the secondary battery cells are located at the vertices of equilateral triangles. An area required to accommodate 35 secondary battery cells 1 was about 160.6 cm2.

### Comparative Example 2

Similarly, the secondary battery cells having an outer diameter (R) of 21 mm were arranged in a stacked configuration in which the centers of the secondary battery cells were located at the vertices of equilateral triangles such that the intervals between secondary battery cells 1 adjacent to each other were all 4 mm. An area required to accommodate 35 secondary battery cells 1 was about 175.8 cm2.

### Example 1

In contrast, as illustrated in FIG. 12, secondary battery cells 1 with an outer diameter (R) of 21 mm were disposed in a row of seven cells in the left-right direction with the first interval (d1) of 2 mm to form battery group 2, battery group 2 was then arranged in five rows in the front-rear direction, such that the second interval (d2) between the secondary battery cells 1 in adjacent battery groups 2 was 4 mm. An area required to accommodate 35 secondary battery cells 1 was about 164.0 cm2.

As described above, when 35 secondary battery cells having an outer diameter (R) of 21 mm were arranged in a stacked arrangement, when the interval between all the secondary battery cells was changed from 2 mm to 4 mm, the area required to accommodate 35 secondary battery cells 1 was changed from about 160.6 cm2 to about 175.8 cm2, and the required area was increased by about 9.5%. In contrast, as in the present example, when battery groups 2 in which the adjacent secondary battery cells 1 were arranged in the diameter direction with the first interval (d1) of 2 mm were arranged such that the second interval (d2) between secondary battery cells 1 between adjacent battery groups 2 was 4 mm, the area required to accommodate 35 secondary battery cells 1 was about 164.0 cm2, and the increase in area was about 2.1% with respect to the arrangement in which all the intervals were 2 mm. From these, it can be seen that, according to the structure in which the plurality of battery groups 2 including the plurality of secondary battery cells 1 arranged with the first interval (d1) provided between secondary battery cells 1 adjacent to each other are arranged with the second interval (d2) larger than the first interval (d1) provided between secondary battery cells 1 of battery groups 2 adjacent to each other as in accordance with the present embodiment, a lot of secondary battery cells 1 can be arranged in a small space without reducing the overall area efficiency while securing a wide interval between the battery groups.

### Other Examples

In the above embodiment, the plurality of secondary battery cells 1 are arranged in one row in the diameter direction of the cells to form battery group 2, and the plurality of battery groups 2 are arranged in the front-rear direction while being shifted in the left-right direction to approximate a stacked arrangement, and the battery group was formed by arranging the plurality of secondary battery cells 1 in two rows. Although the second interval (d2) is provided between the battery groups connected in series to one another in the above embodiment, the second interval (d2) may be provided between the battery groups connected in parallel to one another.

Further, in the above embodiment, the plurality of secondary battery cells 1 constituting each battery group 2 are connected in parallel, and the plurality of battery groups 2 adjacent in the front-rear direction are connected in series to each other, and the secondary battery cells constituting each battery group may be connected in series to each other, and the plurality of adjacent battery groups may be connected in parallel to each other.

### Example 2

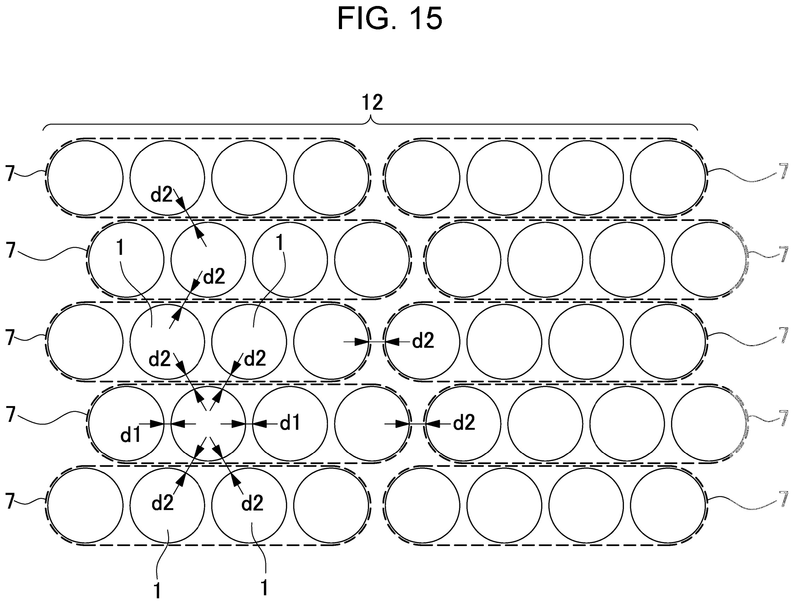

In the example illustrated in FIG. 15, battery group 2 includes four secondary battery cells 1 arranged in a row in the diameter direction. Further, battery unit 12 in the drawing illustrates a state in which two battery groups 2 are arranged in an extending direction of battery groups 2 (the left-right direction in the drawing), and battery groups 2 are arranged in five rows in a direction intersecting the extending direction of battery groups 2 (the front-rear direction in the drawing). The structure in which the number of secondary battery cells 1 arranged in a row in each battery group 2 is reduced as described above reduces heat accumulation in battery group 2 and reduces spread of fire between the battery groups. In battery unit 12, for example, two battery groups 2 arranged in the left-right direction in the drawing are connected in parallel to each other, and five battery groups 2 arranged in the front-rear direction are connected in series to one another. That is, in the battery unit, 40, the secondary battery cells are connected in an 8-parallel and 5-series configuration.

### Example 3

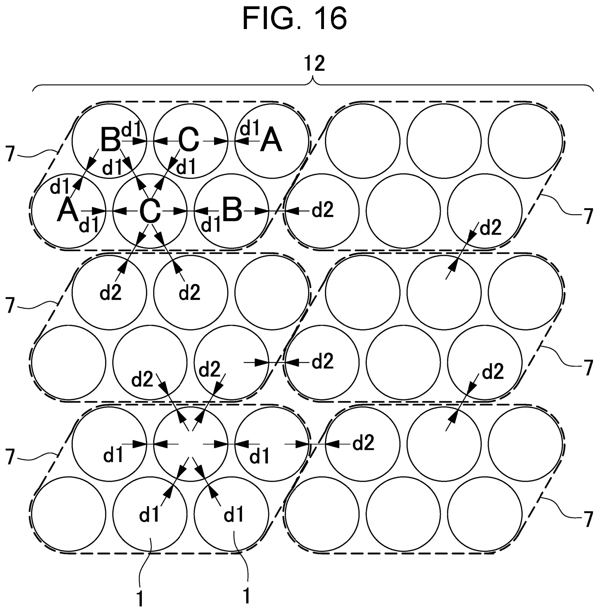

In the example illustrated in FIG. 16, battery group 2 includes six secondary battery cells 1 in which three secondary battery cells 1 arranged in a row in the diameter direction of the cells are arranged in two stages. Further, battery unit 12 in the drawing illustrates a state in which two battery groups 2 are arranged in the left-right direction in the drawing and battery groups 2 are arranged in three stages in the front-rear direction. As described above, in the structure in which secondary battery cells 1 are arranged in two rows in each battery group 2, the maximum number of secondary battery cells 1 arranged adjacent to each other with the first interval (d1) with respect to any secondary battery cell 1 is four or less. For example, in FIG. 16, in battery group 2 positioned at the upper left, two secondary battery cells 1 are adjacent to the secondary battery cell A with the first interval (d1), three secondary battery cells 1 are adjacent to the secondary battery cell B with the first interval (d1), and four secondary battery cells 1 are adjacent to the secondary battery cell C with the first interval (d1). Therefore, in each battery group 2, the number of secondary battery cells 1 disposed adjacent to each other at the first interval (d1) with respect to any secondary battery cell 1 is equal to or less than four, so that heat accumulation in battery group 2 is reduced. In battery unit 12, for example, two battery groups 2 arranged in the left-right direction in the drawing are connected in parallel to each other, and three battery groups 2 arranged in the front-rear direction are connected in series to one another. That is, in battery unit 12, 36 secondary battery cells 1 are connected in a 12-parallel and 3-series configuration.

### INDUSTRIAL APPLICABILITY

A power supply device according to the invention is suitably used as a power supply for a power storage system for homes, businesses, and factories in a stationary power storage application, or a backup power supply for servers, or a power supply for vehicles such as hybrid vehicles and electric vehicles.

### REFERENCE MARKS IN THE DRAWINGS

100 power supply device
1 battery cell
1' heat generating battery cell
1A first end surface
1a center electrode
1b caulking ridge
1B second end surface
1c heat conduction surface
2 battery group
3 heat-conductive member
3A heat-conductive sheet
5 exterior case
10 battery assembly
11 battery block
12 battery unit
13 lead plate
13A main body portion
13a first connection tab
13b second connection tab
13c opening
14 connection bus bar
15 insulating sheet
20 battery holder
20A first divided holder
20B second divided holder
21 holding portion
22 surface plate
23 electrode window
24 opening window
25 partition wall
26 outer peripheral wall
27 insulating wall
28 boundary window
29 cutout portion
30 accommodation space
31 partition chamber
32 stopper
33 air layer
34 partition gap
40 filling recess
40A first filling recess
40B second filling recess
50A first case
50B second case
50C third case
51 bottom surface plate
52 top surface plate
53 side surface plate
54 end surface plate
55 fixing piece
56 end surface plate
57 fixing screw

## Claims

1. A power supply device comprising:
a battery assembly including a plurality of secondary battery cells;
an exterior case accommodating the battery assembly therein; and
a heat-conductive member stacked between the battery assembly and the exterior case and thermally coupled to the plurality of secondary battery cells, wherein
the plurality of secondary battery cells are cylindrical batteries,
the battery assembly further includes a battery holder disposing the plurality of secondary battery cells parallel to one another in multiple stages and rows such that both end surfaces of each of the plurality of secondary battery cells in a longitudinal direction of the each of the plurality of secondary battery cells are disposed on same planes, respectively, and that one end surface of the both end surfaces of the each of the plurality of secondary battery cells is exposed, as a heat conduction surface, from the battery holder and is thermally coupled to the heat-conductive member,
the plurality of secondary battery cells constitute a plurality of battery groups, each battery group of the plurality of battery groups including the plurality of secondary battery cells disposed at a predetermined first interval between adjacent secondary battery cells of the plurality of secondary battery cells constituting the each battery group, the plurality of battery groups being disposed at a second interval between secondary battery cells of adjacent battery groups of the plurality of battery groups, the second interval being larger than the first interval, and
the heat-conductive member has a sheet shape or a plate shape, and is thermally coupled to the plurality of secondary battery cells across the plurality of battery groups.

2. The power supply device according to claim 1, wherein
the battery holder includes a first divided holder and a second divided holder that are divided at an intermediate portion of each of the plurality of secondary battery cells in the longitudinal direction,
the first divided holder includes:
first holding tubular portions connected to one another in multiple stages and rows such that one end portion of the each of the plurality of secondary battery cells at a first end surface of the both end surfaces of the each of the plurality of secondary battery cells is held by a corresponding one of the first divided holders; and
a surface plate closing tip ends of the plurality of first holding tubular portions,
the surface plate has electrode windows opening therein to expose positive and negative electrodes provided on the first end surface of the each of the plurality of secondary battery cells through a corresponding one of the electrode windows,
the second divided holder includes a plurality of second holding tubular portions connected to each other in multiple stages and rows such that another end portion of the each of the plurality of secondary battery cells at a second end surface of the both end surfaces of the each of the plurality of secondary battery cells is held by a corresponding one of the second divided holders, and
the plurality of second holding tubular portions have opening windows provided in tip ends of the plurality of second holding tubular portions, respectively, so as to expose the heat conduction surface of the each of the plurality of secondary battery cells through a corresponding one of the opening windows.

3. The power supply device according to claim 2, wherein the battery holder is made of resin, the plurality of the secondary battery cells include pairs of adjacent secondary battery cells, and each pair of the adjacent secondary battery cells are fixed to each other with adhesive having flame retardancy and are held at a predetermined interval between the each pair of the adjacent secondary battery cells.

4. The power supply device according to claim 3, wherein the adhesive is silicone-based adhesive, epoxy-based adhesive, or zirconia-silica-based adhesive.

5. The power supply device according to claim 3, wherein
the surface plate of the first divided holder has boundary windows opening therein, a corresponding one of the boundary windows being positioned and opening between the each pair of the adjacent secondary battery cells, and
portions of the first holding tubular portions exposed from the boundary windows are partially cut out to form cutout portions having groove shapes in the first holding tubular portions such that side surfaces of the each pair of the adjacent secondary battery cells facing each other are exposed from the cutout portions so as to form filling recesses filled with the adhesive, a corresponding one of the filling recesses being formed between the each pair of the adjacent secondary battery cells and on both sides of the corresponding one of the cutout portions.

6. The power supply device according to claim 3, wherein portions of opening edges of the opening windows of the second holding tubular portions are partially cut out to form cutout portions having groove shapes in the second holding tubular portions such that side surfaces of the each pair of the adjacent secondary battery cells facing each other are exposed from the cutout portions so as to form filling recesses filled with the adhesive, a corresponding one of the filling recesses being formed between the each pair of the adjacent secondary battery cells and on both sides of the corresponding one of the cutout portions.

7. The power supply device according to claim 5 or 6, wherein
the filling recesses includes:
a first filling recess formed between the plurality of secondary battery cells constituting the each battery group; and
a second filling recess formed between the secondary battery cells of the adjacent battery groups,
the plurality of secondary battery cells constituting the each battery group are held at the first interval via a first adhesive portion formed of the adhesive filling the first filling recess, and
the secondary battery cells between the adjacent battery groups are held at the second interval via a second adhesive portion formed of the adhesive filling the second filling recess.

8. The power supply device according to claim 1, wherein the battery holder further includes a partition wall disposed between the adjacent battery groups.

9. The power supply device according to claim 1, wherein
the battery holder includes holding tubular portions facing each other into which both end portions of the plurality of secondary battery cells are inserted and held, respectively, and
an air layer is provided between the holding tubular portions to expose respective intermediate portion of the plurality of secondary battery cells.

10. The power supply device according to claim 9, wherein
the battery holder further includes an outer peripheral wall disposed along outer peripheries of the holding tubular portions, and
the outer peripheral wall forms an accommodation space accommodating the plurality of secondary battery cells therein.

11. The power supply device according to claim 10, wherein
the battery holder further includes a partition wall disposed between the battery adjacent groups, and
the partition wall is integrally formed with the holding tubular portions, both ends of the partition wall are connected to the outer peripheral wall such that the partition wall and the outer peripheral wall form partition chambers accommodating the plurality of battery groups therein.

12. The power supply device according to any one of claims 1 to 6 and 8 to 11, wherein the secondary battery cells of one battery group of the adjacent battery groups are positioned in valleys formed between the secondary battery cells adjacent to each other in another battery group of the adjacent battery groups.

13. The power supply device according to any one of claims 1 to 6 and 8 to 11, wherein
the plurality of secondary battery cells of each of the battery groups are arranged at the first interval in a row in a diameter direction of the plurality of secondary battery cells, and
the plurality of battery groups are arranged at the second interval in rows each being the row.

14. The power supply device according to any one of claims 1 to 6 and 8 to 11, wherein
the plurality of secondary battery cells of the each battery group are connected in parallel to one another, and
the plurality of battery groups are connected in series to one another.

15. The power supply device according to any one of claims 1 to 6 and 8 to 11, wherein the plurality of secondary battery cells of the plurality of battery groups includes one or more secondary battery cells adjacent to any one of the plurality of secondary battery cells at the first interval, a number of the one or more secondary battery cell being four or less.

16. The power supply device according to any one of claims 1 to 6 and 8 to 11, wherein
the first interval is 8% to 15% of an outer diameter of each of the plurality of secondary battery cells, and
the second interval is 1.5 to 2.5 times the first interval.
